(19) Europäisches Patentamt
European Patent Office
Office européen des brevets

(11) **EP 1 045 542 B1**

(12) **EUROPEAN PATENT SPECIFICATION**

(45) Date of publication and mention
of the grant of the patent:
**02.07.2008 Bulletin 2008/27**

(51) Int Cl.:
***H04L 1/00*** *(2006.01)*   ***H04Q 7/38*** *(2006.01)*

(21) Application number: **99302880.2**

(22) Date of filing: **13.04.1999**

(54) **A method for rate adaptation in a cellular packet voice system**

Verfahren zur Ratenanpassung in einem zellularen Sprachpaketsystem

Procédé d'adaptation de débit dans un système cellulaire de phonie par paquets

(84) Designated Contracting States:
**DE ES FI FR GB IT SE**

(43) Date of publication of application:
**18.10.2000 Bulletin 2000/42**

(73) Proprietor: **Lucent Technologies Inc.**
**Murray Hill, New Jersey 07974-0636 (US)**

(72) Inventors:
• **Brooks, Fiona Clare**
**Millbrook Place,**
**Bath BA2 4JY (GB)**
• **Demetrescu, Cristian**
**London SW19 2EU (GB)**
• **Foster, Gerard Terence**
**Swindon,**
**Wiltshire SN2 3GF (GB)**
• **Giustina, Andrea**
**Swindon,**
**Wiltshire SN5 8JU (GB)**
• **Samuel, Louis Gwyn**
**Swindon,**
**Wiltshire SN2 3YG (GB)**
• **Ilas, Constantin**
**Swindon, Wiltshire SN5 9RP (GB)**

(74) Representative: **Williams, David John et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**WO-A-97/16899        WO-A-97/30519**
**US-A- 5 329 531        US-A- 5 691 992**

**Description**

This invention relates to packet radio networks.

The background to the invention will be explained in relation to its application to GSM and GPRS. The invention is applicable more generally, however, as the reader will understand. Packet-switched radio networks can potentially increase system capacity as compared with the circuit-switched networks due to the inherent statistical multiplexing gain. This is because a user is not occupying the radio channel all the time during a session and when the radio channel is idle it can be used by other active users.

In digital mobile telephony, e.g. GSM, standards exist for channel coders which code blocks of voice data for transmission over a radio channel. Those bits in each block which are most significant to accurate reproduction of the voice are cyclic redundancy coded and the output block fits a frame length in the GSM standard. It is not possible to simply use the standard channel encoder for voice over GPRS because although the frame length is the same, a header is required for each data block and that would have to fit in the frame with the payload.

It is known from International Patent Publication WO97/16899 to provide a packet radio network, in which packets of data are sent over a radio link in fixed length frames, data being sent over the radio link in fixed length data blocks each having a length equal to the frame length, said network including: a channel encoder for channel encoding data into data blocks equal in length to the frame length; means for generating a header for each block, signal processing means for puncturing a group of bits in the data blocks to remove $n$ bits to produce a payload, and means for transmitting packets each consisting of the header and the payload, over the radio link. Another packet radio system is described in document WO 97/30519.

The present invention differs from the disclosure of WO97/16899 in that the header has a length of $n$ bits, the data is voice, and a puncturing scheme is used of regularly removing 1 in 8 bits until $n$ bits are removed, as defined in claim 1.

The network preferably includes signal processing means operative on a payload received from the radio link to replace bits removed by puncturing with bits of zero value.

The means for generating a header preferably includes means for check redundancy coding header data.

The channel encoder is preferably operative to convolutionally encode and to cyclic redundancy code the group of bits which is subsequently punctured.

The group of bits is preferably a subset of voice data bits, being bits which are more significant to reproduction of voice from the block.

One embodiment of the invention will now be described by way of example with reference to the accompanying drawing which shows signal processing functions in a network embodying the invention.

What follows describes the changes that will be required to the Digital Signal Processing on both the mobile and the base station, in order to support voice sent as packets over a packet radio network, with reference to the mobile and the base station supporting GSM and General Packet Radio Service.

In order to send voice over a General Packet Radio Service network the Radio Link Control/Medium Access Control block of a standard packet has to be changed. The new block contains a header, and a payload consisting of the coded speech bits coded using a standard GSM speech coder. This new Radio Link Control/Medium Access Control block is coded in a different way from that of a known standard General Packet Radio Service packet. This change of coding is required because for speech data different bits have different importance whereas for data every bit is assumed to have equal importance. For the Radio Link Control/Medium Access Control block payload the Enhanced Full Rate channel coding is implemented. For the Radio Link Control/Medium Access Control block header the Uplink State Flag preceding and ½ rate convolutional coding is used. The standard Digital Signal Processing software in both the mobile and the base station has to be modified in order to code/ decode in an appropriate manner the speech and the header, when a voice packet is sent.

The standard Digital Signal Processing software is able to handle both GSM frames and General Packet Radio Service packets. Changes are necessary In order to detect a General Packet Radio Service packet containing speech and to process it accordingly. In order to achieve a simple and easy to implement system, most of the functions adopted for speech packets processing are adapted from those existing in standard GSMI General Packet Radio Service. However, the way in which they are used is completely original.

The input from the radio Link Control/Medium Access Control layer consists of a 16-bit header and 244-bit payload.

| header 16 | payload 244 bits |
|-----------|------------------|

**Message format from Radio Link Control/Medium Access Control** layer

| Information element | Presence | Length /bits |
|---|---|---|
| Header | Mandatory | 16 |
| Payload | Mandatory | 244 |

Message definition from Radio Link Control/Medium Access Control layer

The 244-bit payload contains three different classes of bits.

| class 1a -50 | class 1b - 124 | class 2 -70 |
|---|---|---|

**Classes present in Enhanced Full Rate Sspeech Coder information bits**

Enhanced full rate channel coding is already present with the digital signal processing for details see GSM 0503 Section 3.1.1. The output bits are W1 to W260.

Full Rate Channel Coding is already present within the Digital signal Processing. For details see GSM 05.03, Section 3.1.2. The output of the Full Rate channel coder is 456 bits c(0)..c(455).

Different puncturing schemes can be used to remove 46 class 1 bits. The Digital Signal processing has to be able to support any puncturing scheme, given in a special table. As a particular case, a 1 in 8 regular puncturing scheme is presented here, so that 46 bits are punctured from Full Rate channel coder output c(0)..c(455). The output of the puncturing process are 410 bits C(46)..C(455). The table with punctured bits is in this case:

| c0 | c8 | c16 | c24 | c32 | c40 | c48 | c56 | c64 | c72 |
|---|---|---|---|---|---|---|---|---|---|
| c80 | c88 | c96 | c104 | c112 | c120 | c128 | c136 | c144 | c152 |
| c160 | c168 | c176 | c184 | c192 | c200 | c208 | c216 | c224 | c232 |
| c240 | c248 | c256 | c264 | c272 | c280 | c288 | c296 | c304 | c312 |
| c320 | c328 | c336 | c344 | c352 | c360 | | | | |

**Bits removed by puncturing scheme**

The output bits C(46)..C(455) are:

$$C(k) = c(k-45) \quad \text{for } k=46,47,...,52$$
$$C(k) = c(k-44) \quad \text{for } k=53,54,...,59$$
$$C(k) = c(k-43) \quad \text{for } k=60,61,...,66$$

etc, until

$$C(k) = c(k-1) \quad \text{for } k=354,355,...,360$$
$$C(k) = c(k) \quad \text{for } k=361,362,...,455$$

Precoding of the USF and ½ rate convolutional coding are adopted for the channel coding of the Radio Link Control/Medium Access Control header. The header bits from the Radio Link Control/Medium Access Control layer are d(0)..d(15).

The Uplink State Flag bits are only sent on the downlink, where they undergo precoding from 3 bits to 6 bits. To ensure symmetry in coded header length on the uplink and downlink three spare bits are added to the uplink header. The spare bits are placed at the end of the header. These spare bits may be used for CRC checking of the header.

The spare bits and remaining Radio Link Control/Medium Access Control header have four tail bits equal to 0 added. The result is a block of 23 bits.

$u(k) = d(k)$      for k=0,1,...,15, Radio Link Control/Medium Access Control header bits

$u(k) = 0$      for k=16,17,18 ,spare bits

$u(k) = 0$      for k=19,20,21,22, tail bits

This block of 23 bits {u(0),u(1),...,u(22)} is encoded with the 1/2 rate convolutional code (identical to the one used for TCH/FS GSM 05.03 Section 3.1.2.2) defined by the polynomials:

$$G0 = 1 + D^3 + D^4$$

$$G1 = 1 + D + D^3 + D^4$$

This results in a block of 46 coded bits: {C(0),C(1),...,C(45)} defined by:

$$C(2k) = u(k) + u(k-3) + u(k-4)$$

$$C(2k+1) = u(k) + u(k-1) + u(k-3) + u(k-4) \text{ for } k = 0,1,...,22 \text{ ; } u(k) = 0 \text{ for } k < 0$$

The 456 bits from the channel coder are passed to the physical layer in the following format

| encoded header -46 | encoded payload -410 bits |
|---|---|

**Format of message to physical** layer

| information element | Presence | Length /bits |
|---|---|---|
| encoded header | Mandatory | 46 |
| encoded payload | Mandatory | 410 |

**Message definition to physical layer**

The channel decoding provides the reverse functions for the channel coding detailed in this document. Additionally, it provides the Bad Frame Indicator (BFI) which is used by the Enhanced Full Rate speech decoder.

The channel decoder receives 456 bits from the physical layer. The format is the same as shown above.

The 410 bits C(46)..C(455) representing the payload are passed to the channel decoding for the payload. It consists of de-puncturing, Full Rate channel decoding and Enhanced Full Rate channel decoding. The divide between the class1 bits and class 2 channel coded bits is as follows:

| class 1 -332 | class 2 - 78 bits |
|---|---|

**Channel coded bits relating to class 1 and class 2 bits**

The de-puncturing process inserts a 0 wherever puncturing occurred at the channel coder. For this the same table is used. In the particular case presented In 3.2.2.3, the output bits of the de-puncturing process are c(0)..c(455), where:

$$c(k) = 0 \qquad \text{for k=0}$$
$$c(k) = C(k+45) \qquad \text{for k=1,2...,7}$$
$$c(k)=0 \qquad \text{for k=8}$$
$$c(k) = C(k+44) \qquad \text{for k=9,10...,15}$$
$$c(k) = 0 \qquad \text{for k=16}$$
$$c(k) = C(k+43) \qquad \text{for k=17,18...,23}$$
$$c(k)=0 \qquad \text{for k=24}$$
$$c(k) = C(k+42) \qquad \text{for k=25,26...,31}$$
etc, until
$$c(k) = 0' \qquad \text{for k=352}$$
$$c(k) = C(k+1) \qquad \text{for k=353,354....359}$$
$$c(k) = 0 \qquad \text{for k=360}$$
$$c(k) = C(k) \qquad \text{for k=361,362...,455}$$

Full Rate Channel Decoding should already be present within the Digital Signal Processing. The output from the Full Rate channel decoding will be 260 bits w(1)..w(260). The Full Rate channel decoding also contains a bit indicating if the Cyclic redundancy code check passed or failed.

The Enhanced Full Rate channel decoding consists of an 8-bit Cyclic redundancy code check, which determines whether the received frame is good or bad through the Bad Frame Indicator flag.

The output from the Enhanced Full Rate channel decoder are 244 bits s(1)..s(244), where:

$$s(k) = w(k) \qquad \text{for k=1,2...,71}$$
$$s(k) = w(k+2) \qquad \text{for k=72,73,...,121}$$
$$s(k) = w(k+4) \qquad \text{for k=122,123,...,174}$$
$$s(k) = w(k+6) \qquad \text{for k=175,176,...,224}$$
$$s(k) = w(k+8) \qquad \text{for k=225,226,...,244}$$

The Bad Frame Indicator flag (BFI)is set if either the Enhanced Full Rate Cyclic redundancy code check failed or the Full Rate Cyclic redundancy code check failed.

The 46 bits C(0)..C(45) representing the header are passed to the channel decoding for the header.

The decoding implemented for General Packet Radio Service Coding Scheme -1 can be used, but on the shorter input length of 46 bits.

The decoding of the Uplink State flag implemented for General Packet Radio Service Coding Scheme-2 can be used.

The output of the channel decoding consists of the Radio Link Control/Medium Access Control header, the payload bits s(1)..s(244) and the Bad Frame Indicator flag. The format is:

| header-<br>16 bits | Speech-<br>244 bits | BFI-<br>1 bits |
|---|---|---|

Message format passed to Radio Link Control/Medium Access Control layer

| Information element | Presence | Length /bits |
|---|---|---|
| header | Mandatory | 16 |
| speech payload | Mandatory | 244 |
| BFI | Mandatory | 1 |

**Message definition to Radio Link Control/Medium Access Control layer.**

**Claims**

1. A packet radio network, in which packets of data are sent over a radio link in fixed length frames, data being sent over the radio link in fixed length data blocks each having a length equal to the frame length, said network including: a channel encoder for channel encoding data into data blocks equal in length to the frame length; means for generating a header for each block, signal processing means for puncturing a group of bits in the data blocks to remove $n$ bits to produce a payload; and means for transmitting packets each consisting of the header and the payload, over the radio link, wherein the header has a length of $n$ bits, the data is voice, and a puncturing scheme is used of regularly removing 1 in 8 bits until $n$ bits are removed.

2. A network as claimed in claim 1, in which $n$ is 46.

3. A network as claimed in claim 1 or claim 2, including signal processing means operative on a payload received from the radio link to replace bits removed by puncturing with bits of zero value.

4. A network as claimed in any preceding claim, wherein the means for generating a header includes means for check redundancy coding header data.

5. A network as claimed in any preceding claim, wherein the channel encoder is operative to cyclic redundancy code the group of bits which is subsequently punctured.

6. A network as claimed in claim 5, wherein the group of bits is a subset of voice data bits, being bits which are more significant to reproduction of voice from the block.

**Patentansprüche**

1. Paketfunknetz, in welchem Datenpakete über eine Funkverbindung in Rahmen fester Länge gesendet werden, wobei die Daten über die Funkverbindung in Datenblöcken fester Länge gesendet werden, von denen jeder eine Länge gleich der Rahmenlänge aufweist, wobei das Netz umfasst: einen Kanalcodierer zur Kanalcodierung der Daten in Datenblöcken von gleicher Länge wie die Rahmenlänge; Mittel zum Erzeugen eines Datenkopfs für jeden Block, Signalverarbeitungsmittel zum Punktieren einer Gruppe von Bits in den Datenblöcken, um $n$ Bits für die Erzeugung einer Nutzlast zu entfernen; und Mittel zum Übertragen von Paketen, jedes bestehend aus den Kopfdaten und der Nutzlast, über die Funkverbindung, wobei die Kopfdaten eine Länge von $n$ Bits aufweisen, es sich bei den Daten um Sprache handelt und ein Punktierverfahren angewendet wird, um regelmäßig 1 von 8 Bits zu entfernen, bis $n$ Bits entfernt sind.

2. Netz nach Anspruch 1, in dem $n$ gleich 46 ist.

3. Netz nach Anspruch 1 oder Anspruch 2, umfassend Signalverarbeitungsmittel, die bei einer von der Funkverbindung empfangenen Nutzlast durch Punktieren entfernte Bits durch Bits mit einem Wert von null ersetzen.

4. Netz nach einem der vorhergehenden Ansprüche, wobei die Mittel zum Erzeugen eines Datenkopfs Mittel zur Redundanzprüfung bei der Codierung der Kopfdaten umfassen.

5. Netz nach einem der vorhergehenden Ansprüche, wobei der Kanalcodierer eine zyklische Redundanzcodierung der Gruppe von Bits durchführt, die anschließend punktiert wird.

6. Netz nach Anspruch 5, wobei die Gruppe von Bits eine Untermenge der Sprachdatenbits ist, welche Bits sind, die für die Wiedergabe von Sprache aus dem Block von größerer Bedeutung sind.

**Revendications**

1. Réseau de radiocommunication par paquets dans lequel des paquets de données sont envoyés sur une liaison radioélectrique dans des trames de longueur fixe, les données étant émises sur la liaison radioélectrique dans des blocs de données de longueur fixe ayant chacun une longueur égale à la longueur de trame, ledit réseau comprenant : un codeur de canal pour le canal codant les données en blocs de données dont la longueur est égale à la longueur de trame ; des moyens pour générer un en-tête pour chaque bloc ; des moyens de traitement de signal pour prélever un groupe de bits dans le bloc de données afin de retirer $n$ bits pour produire une charge utile ; et des moyens pour transmettre des paquets constitués chacun de l'en-tête et de la charge utile sur la liaison radioélectrique, l'en-tête ayant une longueur de $n$ bits, les données étant de la parole et un modèle de prélèvement étant utilisé pour retirer régulièrement 1 bit sur 8 jusqu'à ce que $n$ bits aient été retirés.

2. Réseau selon la revendication 1, dans lequel $n$ est égal à 46.

3. Réseau selon la revendication 1 ou 2, comprenant des moyens de traitement de signal agissant sur une charge utile reçue de la part de la liaison radioélectrique pour remplacer les bits retirés par prélèvement par des bits de valeur nulle.

4. Réseau selon l'une quelconque des revendications précédentes, les moyens de génération d'un en-tête comprenant des moyens pour contrôler la redondance des données d'en-tête codées.

5. Réseau selon l'une quelconque des revendications précédentes, le codeur de canal ayant pour fonction de coder avec une redondance cyclique le groupe de bits qui est ensuite prélevé.

6. Réseau selon la revendication 5, le groupe de bits étant un sous-ensemble de bits de données vocales, ces bits étant les plus importants pour la reproduction de la parole à partir du bloc.

```
                  payload
                              ┌──────────┐      ┌──────────┐      ┌──────────┐
                              │  EFR     │      │  FR      │      │  Punct-  │
                              │  channel │─────▶│  channel │─────▶│  uring   │
                              │  coding  │      │  coding  │      │          │
                              └──────────┘      └──────────┘      └──────────┘
  ┌──────────┐                                                                 ┌──────────┐
  │  split   │                                                                 │ combine  │
─▶│ incoming │                                                                 │ data     │
  │  data    │                                                                 └──────────┘
  └──────────┘                ┌──────────┐      ┌──────────┐
                              │  Add 3   │      │  ½ rate  │
                              │  spare   │─────▶│  conv    │
                              │  bits    │      │  coding  │
                  header      └──────────┘      └──────────┘
```

```
        ┌──────┐
        │ BFI  │
        └──────┘
                    BFI               BFI
        ┌──────────┐      ┌──────────┐      ┌──────────┐       payload
        │  EFR     │      │  FR      │      │ De-punc- │
        │  channel │◀─────│  channel │◀─────│ turing   │◀───
        │ decoding │      │ decoding │      │          │
  ┌─────┴────┐     └──────────┘      └──────────┘
  │ combine  │                                          ┌──────────┐
◀─│ data     │          ┌──────────┐                    │  split   │
  └──────────┘          │  SID     │                    │ incoming │◀───
                        │ codeword │                    │  data    │
                        └──────────┘                    └──────────┘
               SID
        ┌──────────┐      ┌──────────┐
        │  USF     │      │  CS-1    │
        │ decoding │◀─────│ decoding │◀───
        └──────────┘      └──────────┘
                                                          header
```

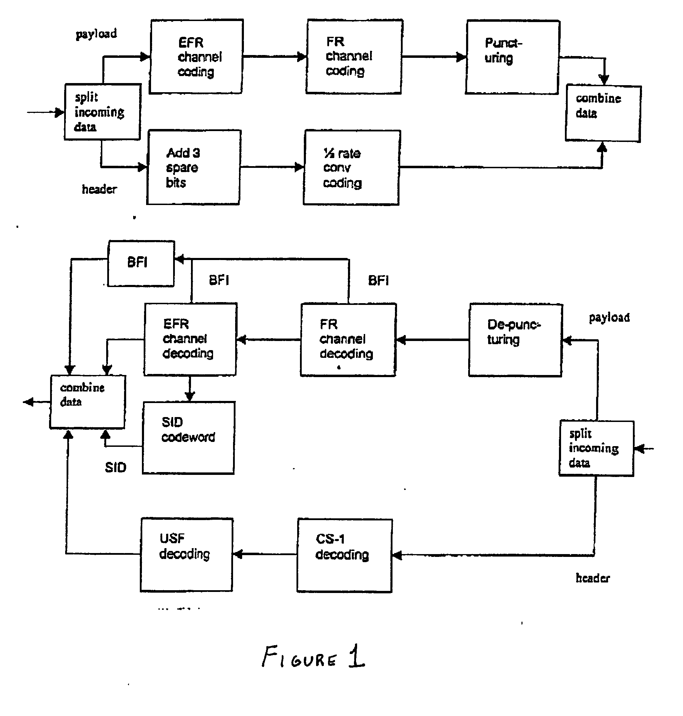

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9716899 A

- WO 9730519 A